(19) Europäisches Patentamt
European Patent Office
Office européen des brevets

(11) **EP 2 211 043 A1**

(12) **DEMANDE DE BREVET EUROPEEN**

(43) Date de publication:
**28.07.2010 Bulletin 2010/30**

(51) Int Cl.:
*F02D 33/02* [(2006.01)]     *F02D 21/08* [(2006.01)]
*F02D 13/02* [(2006.01)]

(21) Numéro de dépôt: **09290993.6**

(22) Date de dépôt: **23.12.2009**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**
Etats d'extension désignés:
**AL BA RS**

(30) Priorité: **21.01.2009 FR 0900264**

(71) Demandeur: **IFP**
**92852 Rueil-Malmaison Cédex (FR)**

(72) Inventeurs:
• **Leroy, Thomas**
  **75014 Paris (FR)**
• **Chauvin, Jonathan**
  **92200 Neuilly-sur-Seine (FR)**

(54) **Procédé pour contrôler les masses de gaz enfermées dans un cylindre d'un moteur essence à distribution variable**

(57)     On détermine une consigne de masse d'air enfermée dans le cylindre ($\bar{M}_{air}$) et une consigne de masse de gaz brûlés enfermée dans le cylindre ($\bar{M}_{gb}$). Puis, pour respecter ces consignes : on génère une consigne de pression d'admission ($\bar{P}_{adm}$), à partir de mesures des positions des actionneurs de distribution variable ($\Phi_{adm}$, $\Phi_{ech}$) et de la consigne de masse d'air ($\bar{M}_{air}$) ; on génère une consigne de position pour chacun des deux action- neurs de distribution variable ($\bar{\Phi}_{adm}$, $\bar{\Phi}_{ech}$), à partir d'une mesure de pression d'admission ($P_{adm}$) et de la consigne de masse de gaz brûlés ($\bar{M}_{gb}$) ; et enfin, on pilote un papillon d'admission (PA) et les actionneurs de distribu- tion variable (ActVVT) de façon à respecter la consigne de pression d'admission ($\bar{P}_{adm}$) et les consignes de position des actionneurs de distribution variable ($\bar{\Phi}_{adm}$, $\bar{\Phi}_{ech}$) ; pour application notamment au contrôle de mo- teur essence à distribution variable.

Fig. 3

## Description

La présente invention concerne le domaine du contrôle moteur et plus particulièrement le contrôle des masses de gaz enfermées dans un cylindre d'un moteur essence à distribution variable.

## État de la technique

Les contraintes liées à la consommation et aux émissions de polluants des moteurs essence ont entraînées d'importantes modifications de ces derniers. La réduction de la taille de la cylindrée (« *downsizing* ») apparaît comme étant la plus prometteuse des issues. En effet, elle permet de déplacer les points de fonctionnement du moteur dans des zones de meilleur rendement (réduction des pertes par pompage). Le fonctionnement d'un tel moteur nécessite alors la présence d'un turbocompresseur pour assurer un couple de sortie équivalent à un moteur de cylindrée classique. Couplé à une injection directe, ce type de moteur nécessite la présence d'une distribution variable pour profiter du plein potentiel de pleine charge. Le terme « distribution variable » désigne ici une technologie permettant de faire varier le phasage des soupapes d'admission et d'échappement.

L'objectif du contrôle moteur est de garantir la réponse en couple à une demande du conducteur (via la pédale d'accélérateur), tout en minimisant les polluants et la consommation. Sur un moteur essence, le catalyseur trois voies assure le traitement des espèces polluantes (oxydes d'azote, NOx, hydrocarbures, HC, et monoxyde de carbone, CO). Ce dernier ne fonctionne de façon optimale que dans une plage étroite de fonctionnement, i.e. lorsque les proportions du mélange air / carburant permettent d'assurer une combustion complète du carburant sans excès d'aire. On parle de stoechiométrie. Cette proportion est obtenue pour une richesse égale à un. On note *r* cette richesse de combustion, définie comme étant le rapport entre d'une part le rapport entre la masse de carburant ($M_{fuel}$) sur la masse d'air ($M_{air}$) pour le mélange réel, et d'autre part, le rapport entre la masse de carburant ($M_{fuel}$) sur la masse d'air ($M_{ais}$) pour le mélange stoechiométrique :

$$ r = \frac{\left(\dfrac{M_{fuel}}{M_{air}}\right)_{réel}}{\left(\dfrac{M_{fuel}}{M_{air}}\right)_{stoechiométrique}} = \frac{\left(\dfrac{M_{fuel}}{M_{air}}\right)_{réel}}{14,5} $$

On utilise généralement un paramètre nommé lambda, λ, correspondant à l'inverse de la richesse. Ainsi : λ = 14,5 · $M_{fuel}$ / $M_{air}$. L'objectif est de garder une richesse égale à 1 (stoechiométrie), la masse de carburant à injecter est donc liée à la masse d'air enfermée par la relation : $M_{fuel} = M_{air}$ / 14,5. Il devient évident que le couple fourni ne dépend plus que d'une information : la masse d'air enfermée dans le cylindre.

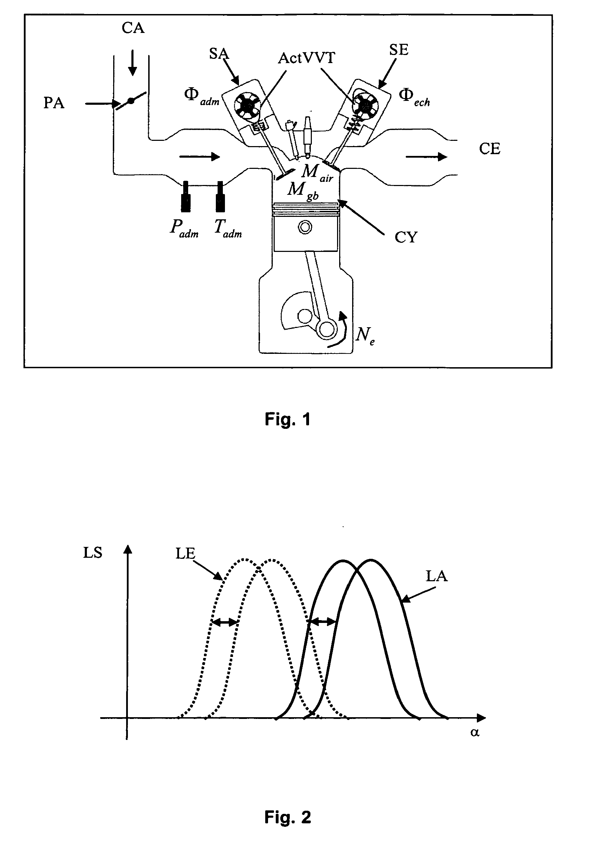

La figure 1 est un schéma d'un moteur essence à distribution variable de type VVT, « Variable Valve Timing ». Ce moteur comporte un collecteur d'admission (CA) d'air frais, dans lequel un papillon d'admission (PA) permet de régler la quantité d'air admise dans le cylindre (CY). Des moyens pour mesurer la pression ($P_{adm}$) et la température ($T_{adm}$) sont généralement positionnés entre le cylindre (CY) et le papillon (PA). Le cylindre (CY) comporte des soupapes d'admission (SA) et d'échappement (SE). Chacune de ces soupapes est munie d'un actionneur VVT (ActVVT) permettant de contrôler le phasage de la levée de la soupape. La position de cet actionneur est noté $\Phi_{adm}$ pour la soupape d'admission et $\Phi_{ech}$ pour la soupape d'échappement. Enfin, le moteur comporte en sortie du cylindre un collecteur d'échappement (CE).

Dans un moteur à distribution fixe, le remplissage en air est donné par une relation statique dépendant du régime et de la pression d'admission. Contrôler la masse d'air dans le cylindre revient donc à contrôler la pression d'admission via le papillon d'admission. Dans un moteur à distribution variable de type VVT, le remplissage dépend également des instants d'ouverture et de fermeture des soupapes d'admission et d'échappement. La figure 2 illustre le déphasage (translation) de courbes de levée des soupapes (LS) en fonction de l'angle vilebrequin α: la levée de la soupape d'échappement est notée LE, et celle de la soupape d'admission est notée LA. Le déphasage des soupapes permet de modifier la quantité de gaz brûlés dans la chambre en permettant une recirculation interne des gaz provenant de la combustion précédente. Lors d'un transitoire de couple, la différence de dynamique entre la pression d'admission et les actionneurs de distribution variable (actionneur VVT par exemple) peut affecter le transitoire de masse d'air. Il s'ensuit une dégradation du transitoire de couple et de l'agrément de conduite.

Pour compenser l'effet des actionneurs de distribution variable sur la masse d'air en transitoire, on connaît différentes stratégies de contrôle. Un contrôle dynamique des actionneurs de distribution variable basé sur la mesure de position du papillon et du régime est présenté dans :
A. Stefanopoulou and I. Kolmanovsky, "Dynamic scheduling of internal exhaust gas recirculation systems, "in Proc. IMECE, vol. 61, 1997, pp. 671-678.

Cependant, une telle stratégie nécessite une bonne connaissance de la dynamique des actionneurs de distribution variable, ce qui en réalité n'est pas le cas (dynamique fonction de la température et de la pression d'huile).

D'autres techniques considèrent les actionneurs de distribution variable comme une perturbation sur le système d'admission d'air frais. Ces méthodes génèrent une consigne de position papillon permettant d'obtenir une réponse transitoire en air, similaire à celle que l'on peut obtenir sur un moteur à distribution fixe. De telles méthodes sont présentées dans :

- M. Jankovic, F. Frischmuth, A. Stefanopoulou, and J. Cook, "Torque management of engines with variable cam timing," in Control Systems Magazine, IEEE, vol. 18, 1998, pp. 34-42.

Ou encore dans:

- M. Jankovic, "Nonlinear control in automotive engine applications," in Proc. of 15th International Symposium on Mathematical Theory of Networks and Systems, 2002.

Ces méthodes prennent en compte les différentes dynamiques du système en utilisant la mesure de la position des actionneurs de distribution variable dans la commande du papillon. Cependant, dans toutes ces techniques, les actionneurs de distribution variable sont positionnés statiquement pour répondre à un optimum de quantité de gaz brûlés dans le cylindre en fonction du point de fonctionnement.

L'objet de l'invention concerne un procédé alternatif pour assurer le contrôle des masses d'air et de gaz brûlés dans le cylindre, en prenant en compte les dynamiques du système. Le procédé permet de piloter la masse d'air enfermée en générant une consigne de pression d'admission, en prenant en compte la mesure de position des actionneurs de distribution variable. Le procédé permet, en parallèle, de piloter la masse de gaz brûlés en générant une consigne d'actionneurs de distribution variable, en prenant en compte la mesure de pression d'admission.

**Le procédé selon l'invention**

L'invention concerne un procédé pour contrôler des masses de gaz enfermées dans un cylindre d'un moteur essence à distribution variable. Le cylindre comporte une soupape d'admission et une soupape d'échappement munie chacune d'un actionneur de distribution variable. Le cylindre est relié à un collecteur d'admission muni d'un papillon d'admission. Selon le procédé, on détermine une consigne de masse d'air enfermée dans le cylindre et une consigne de masse de gaz brûlés enfermée dans le cylindre, et l'on respecte ces consignes de masses de gaz en réalisant les étapes suivantes :

- on génère une consigne de pression d'admission, à partir de mesures des positions des actionneurs de distribution variable et de la consigne de masse d'air ;

- on génère une consigne de position pour chacun des deux actionneurs de distribution variable, à partir d'une mesure de pression d'admission et de la consigne de masse de gaz brûlés ; et

- on pilote ledit papillon d'admission et lesdits actionneurs de distribution variable de façon à respecter la consigne de pression d'admission et les consignes de position des actionneurs de distribution variable.

Selon le procédé, on peut générer les consignes de position des actionneurs de distribution variable :

- en générant une consigne de position d'un premier actionneur au moyen d'une cartographie ;

- en générant une consigne de position d'un second actionneur au moyen de la consigne de position du premier actionneur et d'une mesure de pression d'admission et de la consigne de masse de gaz brûlés; et

- en modifiant la consigne de position du premier actionneur si la consigne de position du second actionneur correspond à une position limite pour ledit second actionneur.

Pour déterminer la consigne de pression d'admission et les consignes de position des actionneurs de distribution variable, on peut utiliser un modèle statique de remplissage du cylindre, comportant un premier modèle *f* permettant d'estimer une masse d'air dans un cylindre en fonction d'une pression d'admission et de positions d'actionneurs de distribution variable, et un second modèle $g$ permettant d'estimer une masse de gaz brûlés dans un cylindre en fonction d'une pression d'admission et de positions d'actionneurs de distribution variable, ledit modèle $f$ étant inversible par rapport à la pression d'admission, et ledit modèle $g$ étant inversible par rapport aux positions des actionneurs de distribution variable.

D'autres caractéristiques et avantages du procédé selon l'invention, apparaîtront à la lecture de la description ci-après d'exemples non limitatifs de réalisations, en se référant aux figures annexées et décrites ci-après.

**Présentation succincte des figures**

- la figure 1 est un schéma d'un moteur essence à distribution variable de type VVT, «Variable Valve Timing ».

- la figure 2 illustre le déphasage (translation) de courbes de levée des soupapes (LS) en fonction de l'angle vilebrequin $\alpha$.

- la figure 3 illustre la stratégie de contrôle selon l'invention.

**Description détaillée du procédé**

Au cours de la description, les notations suivantes sont utilisées:

Variables mesurées :

- $N_e$ : régime moteur. Classiquement, celui-ci est considéré constant. (Cette hypothèse étant justifié par le fait que les variations de régimes sont beaucoup plus lentes que les variations des autres variables considérées).

- $P_{adm}$ : pression dans le collecteur d'admission. Elle correspond à une valeur moyenne entre chaque PMH (Point Mort Haut). On note $\Omega_P$ le domaine de définition de la pression.

- $T_{adm}$ : température dans le collecteur d'admission. Classiquement, cette variable est considérée constante. En effet, un échangeur situé en amont du papillon permet de réguler la température d'admission.

- $\Phi_{adm}$ : position de l'actionneur de distribution variable de la soupape d'admission. Cette position correspond à un déphasage, en degré, par rapport à une position de référence. L'actionneur est saturé, son domaine de fonctionnement est noté $\Omega_{adm}$.

- $\Phi_{ech}$ : position de l'actionneur de distribution variable de la soupape d'échappement. Cette position correspond à un déphasage, en degré, par rapport à une position de référence. L'actionneur est saturé, son domaine de fonctionnement est noté $\Omega_{ech}$.

Variables à contrôler:

- $M_{air}$ : masse d'air enfermée dans le cylindre. Elle correspond à la quantité d'air présente dans le cylindre au moment de la fermeture de la soupape d'admission. On note $\Omega_{air}$ le domaine de définition de la masse d'air.

- $M_{gb}$ : masse de gaz brûlés enfermée dans le cylindre. Elle correspond à la quantité de gaz brûlés présente dans le cylindre au moment de la fermeture de la soupape d'admission. On note $\Omega_{gb}$ le domaine de définition de la masse de gaz brûlés.

Consignes à réaliser :

- $\overline{M}_{air}$ : consigne de masse d'air enfermée dans le cylindre. Elle est donnée par une cartographie fonction du régime et du couple demandé par le conducteur.

- $\overline{M}_{gb}$ : consigne de masse de gaz brûlés enfermée dans le cylindre. Elle est donnée par une cartographie fonction du régime et du couple demandé par le conducteur. Elle correspond à une valeur optimale d'un point de vue consommation - pollution.

Consignes déterminées par le contrôleur de masses enfermées:

- $\overline{P}_{adm}$ : consigne de pression d'admission. Cette grandeur est déterminée par le contrôleur de masses enfermées.

- $\overline{\Phi}_{adm}$ : consigne de position de l'actionneur de distribution variable de la soupape d'admission. Cette grandeur est déterminée par le contrôleur de masses enfermées.

- $\overline{\Phi}_{ech}$ : consigne de position de l'actionneur de distribution variable de la soupape d'échappement. Cette grandeur est déterminée par le contrôleur de masses enfermées.

L'objectif du procédé selon l'invention est de contrôler la masse de gaz enfermée dans un cylindre d'un moteur essence à distribution variable. Pour ce faire, on détermine dans un premier temps une consigne de masse d'air enfermée dans le cylindre et une consigne de masse de gaz brûlés enfermée dans le cylindre.
Ces deux consignes sont obtenues au moyen de cartographies qui sont fonction du régime et du couple demandé par le conducteur. Ce type de cartographie est bien connu des spécialistes.
Le remplissage en air et en gaz brûlés du cylindre dépend de manière quasi-statique des conditions externes au cylindre : pression d'admission et positions des actionneurs de distribution variable. Ainsi, pour respecter ces consignes de masses de gaz, on réalise les étapes suivantes :

1- on génère une consigne de pression d'admission, à partir de mesures des positions des actionneurs de distribution variable et de la consigne de masse d'air ;

2- on génère une consigne de position pour chacun des deux actionneurs de distribution variable, à partir d'une mesure de pression d'admission et de la consigne de masse de gaz brûlés ; et

3- on pilote un papillon d'admission et les actionneurs de distribution variable de façon à respecter la consigne de pression d'admission et les consignes de position des actionneurs de distribution variable.

1. Génération d'une consigne de pression d'admission

L'objectif principal du contrôle est la masse d'air enfermée puisqu'elle est directement liée au couple et à la richesse. On utilise donc la variable de contrôle qui a la plus forte influence sur le remplissage, c'est-à-dire la pression d'admission (puisque les actionneurs de distribution variable sont des actionneurs saturés).
Pour générer une consigne de pression d'admission, on prend en compte la consigne de masse d'air frais, mais également les mesures des positions des actionneurs de distribution variable.
Pour ce faire, on peut utiliser un modèle statique de remplissage du cylindre. Ce modèle comporte

- un premier modèle, noté *f,* permettant d'estimer la masse d'air dans le cylindre en fonction de la pression d'admission et des positions des actionneurs de distribution variable ;
- un second modèle, noté *g,* permettant d'estimer la masse de gaz brûlés dans le cylindre en fonction de la pression d'admission et des positions des actionneurs de distribution variable.

Le modèle s'écrit alors :

$$\begin{cases} M_{air} = f(P_{adm}, \Phi_{adm}, \Phi_{ech}) \\ M_{gb} = g(P_{adm}, \Phi_{adm}, \Phi_{ech}) \end{cases}$$

Le modèle *f* doit être inversible par rapport à la pression d'admission, et le modèle *g* doit être inversible par rapport aux positions des actionneurs de distribution variable. Ainsi, les modèles *f* et *g* sont des fonctions qui satisfont les trois hypothèses d'inversion partielle suivantes :

- Pour tout $(\Phi_{adm},\Phi_{ech},M_{air}) \in \Omega_{adm} \times \Omega_{ech} \times \Omega_{air}$, il existe un unique $P_{adm} \in \Omega_P$ tel que $f(P_{adm},\Phi_{adm},\Phi_{ech}) = M_{air}$.

- Pour tout $(P_{adm},\Phi_{ech},M_{gb}) \in \Omega_P \times \Omega_{ech} \times \Omega_{gb}$, il existe un unique $\Phi_{adm} \in \mathfrak{R}$ tel que $g(P_{adm},\Phi_{adm},\Phi_{ech}) = M_{gb}$.

- Pour tout $(P_{adm},\Phi_{adm},M_{gb}) \in \Omega_P \times \Omega_{adm} \times \Omega_{gb}$, il existe un unique $\Phi_{ech} \in \mathfrak{R}$ tel que $g(P_{adm},\Phi_{adm},\Phi_{ech}) = M_{gb}$.

On défini alors les trois fonctions inverses partielles $f^{-1}_{\Phi_{adm},\Phi_{ech}}$, $g^{-1}_{P_{adm},\Phi_{ech}}$ et $g^{-1}_{P_{adm},\Phi_{int}}$ qui satisfont

$$\begin{cases} M_{air} = f(P_{adm} = f^{-1}_{\Phi_{adm},\Phi_{ech}}(M_{air}),\Phi_{adm},\Phi_{ech}) \\ M_{bg} = g(P_{adm},\Phi_{adm} = g^{-1}_{P_{adm},\Phi_{ech}}(M_{gb}),\Phi_{ech}) \\ M_{bg} = g(P_{adm},\Phi_{adm},\Phi_{ech} = g^{-1}_{P_{adm},\Phi_{adm}}(M_{gb})) \end{cases} \qquad (1)$$

Selon un exemple de réalisation, on utilise le modèle statique de remplissage défini dans le document suivant, et rappelé en annexe :

T.Leroy, J. Chauvin, F. Le Berr, A. Duparchy and G.Alix, "Modeling Fresh Air Charge and Residual Gas Fraction on a Dual Independant Variable Valve Timing SI Engine", in Proc. of SAE Conference, 2008-01-0983, 2008*).

L'inversion du modèle de remplissage permet de calculer la consigne de pression d'admission qui réalise la masse d'air souhaitée, en prenant en compte la position actuelle des actionneurs de distribution variable (WT). L'expression de la consigne de pression est la suivante :

$$\overline{P}_{adm} = f^{-1}_{\Phi_{adm},\Phi_{ech}}(\overline{M}_{air}) \qquad (2)$$

En remplaçant (2) dans (1), l'égalité $M_{air} = \overline{M}_{air}$ est toujours respectée, ce qui signifie que le respect de la consigne de pression d'admission conduit bien à un respect de la consigne de masse d'air frais.

2. Génération de consignes de position des actionneurs de distribution variable

Un second objectif du contrôle est la masse de gaz brûlés enfermée. Les deux variables de contrôle restantes sont les positions des actionneurs de distribution variable. Le système est donc « sur-actionné ». Pour contraindre le système, un actionneur est fixé (par exemple la position de l'actionneur de distribution variable de la soupape d'admission. La stratégie fonctionne de la même manière si c'est la position de l'actionneur de distribution variable de la soupape d'échappement qui est contrainte. Une position de l'actionneur de distribution variable de la soupape d'admission satisfaisant des critères de minimisation de polluants et consommation est déterminée à partir d'une cartographie masse d'air / régime.

Appelons h : $\Omega_{air} \to \Omega_{adm}$ cette cartographie : $h(N_e,\overline{M}_{air})$. Elle provient d'une optimisation de la position de l'actionneur de distribution variable minimisant les émissions polluantes, ainsi que la consommation dans des conditions stabilisées. La position de l'actionneur de distribution variable de la soupape d'échappement devient alors le seul degré pour le contrôle de la masse de gaz brûlés. Sa consigne est calculée à partir de l'inversion du modèle de masse de gaz brûlé (1). Comme précédemment, c'est la mesure de pression d'admission qui est utilisée dans l'inversion :

$$\overline{\Phi}_{ech} = g^{-1}_{P_{adm},h(\overline{M}_{air})}(\overline{M}_{gb})$$

$$\overline{\Phi}_{adm} = h(\overline{M}_{air})$$

Selon un mode de réalisation, lorsque la consigne de la position de l'actionneur de distribution variable de la soupape d'échappement devient irréalisable (à cause de la saturation d'actionneur - la soupape atteint une position limite), le degré de liberté que l'on avait condamné, la position de l'actionneur de distribution variable de la soupape d'admission, est utilisé pour réaliser la demande de masse de gaz brûlés. On génère alors les consignes de position des actionneurs de distribution variable de la façon suivante :

- on génère une consigne de position d'un premier actionneur au moyen de la cartographie $h$ ;

- on génère une consigne de position du second actionneur au moyen de la consigne de position du premier actionneur et d'une mesure de pression d'admission et de la consigne de masse de gaz brûlés (i.e. à partir du modèle $g$) ; et

- on modifie la consigne de position du premier actionneur si la consigne de position du second actionneur correspond à une position limite pour le second actionneur.

Les expressions des consignes des positions sont alors les suivantes:

$$\overline{\Phi}_{ech} = S^{at}_{ech}\left(g^{-1}_{P_{adm},h(\overline{M}_{air})}(\overline{M}_{gb})\right)$$

$$\overline{\Phi}_{adm} = \begin{cases} h(\overline{M}_{air}) & si \quad \overline{\Phi}_{ech} \in \overset{\circ}{\Omega}_{ech} \\ S^{at}_{adm}\left(g^{-1}_{P_{adm},\overline{\Phi}_{ech}}(\overline{M}_{gb})\right) & sinon \end{cases} \tag{3}$$

où $\overset{\circ}{\Omega}_{ech}$ est l'intérieur de $\Omega_{ech}$, $S^{at}_{adm}$ et $S^{at}_{ech}$ sont les fonctions saturation des actionneurs de distribution variable.

En remplaçant (3) dans (1), l'égalité $M_{gb} = \overline{M}_{gb}$ est toujours respectée, sous réserve qu'au moins une position n'est pas saturée, ce qui signifie que le respect des consignes de position conduit bien à un respect de la consigne de masse de gaz brûlés.

Une fois ces consignes générées, on pilote le papillon d'admission et les actionneurs de distribution variable de façon à respecter la consigne de pression d'admission et les consignes de position des actionneurs de distribution variable.

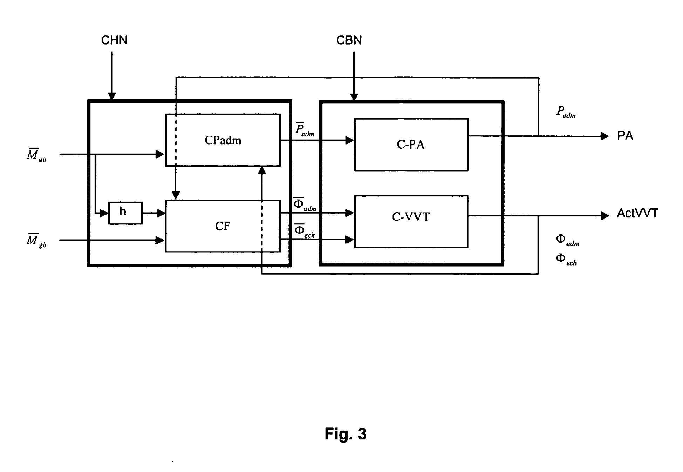

Pour implémenter ce procédé, la stratégie de contrôle, illustrée sur la figure 3, combine deux types de contrôleurs :

1. Le premier type de contrôleur est appelé contrôleur bas-niveaux, il est noté *CBN*. Il comporte deux contrôleurs indépendants : l'un, noté *C-PA,* a pour fonction le contrôle de la pression dans le collecteur d'admission, l'autre, noté *C-VVT,* a pour fonction le contrôle des positions des actionneurs de distribution variable des soupapes d'admission et d'échappement.

Ces contrôleurs bas-niveaux peuvent être de n'importe quel type. Le contrôle de la pression d'admission s'effectue en pilotant l'actionneur papillon (PA). Le contrôle peut par exemple utiliser le capteur de pression situé dans le collecteur d'admission. Un exemple de contrôleur de ce type est présenté dans T.Leroy, J.Chauvin and N.Petit, "Airpath Control of a SI Engine with Variable Valve Timing Actuators", in Proc. of ACC, 2008.

Le contrôle de la position des actionneurs de distribution variable peut par exemple utiliser une mesure de position. Un exemple de contrôleur de ce type est présenté dans J. Chauvin and N. Petit, "Experimental Control of Variable Cam Timing Actuators', in Proc. of IFAC Automotive Control, 2007.

Ces deux contrôleurs indépendants n'ayant pas les mêmes performances en transitoire (à faible charge, les actionneurs de distribution variable (ActVVT) sont lents par rapport à la pression d'admission alors qu'à forte charge, la pression est beaucoup plus lente à cause de l'inertie du turbocompresseur. Il parait donc inévitable que les grandeurs à piloter (masse d'air/gaz brûlés) soient dégradées.

La stratégie de contrôle proposée propose une coordination de ces contrôleurs bas - niveau, en introduisant un contrôleur haut - niveau déterminant les consignes de pression et positions à réaliser pour satisfaire les masses enfermées demandées.

2. Le second type de contrôleur est donc appelé contrôleur haut-niveaux, il est noté *CHN*. Il comporte deux contrôleurs indépendants : l'un, noté $CP_{adm}$, a pour fonction déterminer une consigne de pression dans le collecteur d'admission, l'autre, noté $C\Phi$, a pour fonction déterminer des consignes de position des actionneurs de distribution variable des soupapes. Ces consignes sont déterminées en fonction d'une consigne de masse d'air et d'une consigne de masse de gaz brûlé.

Pour prendre en compte les différents temps de réponse des contrôleurs bas - niveau, on utilise donc les mesures de la pression d'admission et des positions des actionneurs pour la génération de leur consigne respective. Cette stratégie de contrôle assure le bon comportement en transitoire des masses enfermées. En effet, la lenteur d'un contrôleur bas-niveau par rapport à l'autre est prise en compte par l'utilisation des mesures des variables bas-niveau dans la génération des consignes haut-niveau.

Cette stratégie de contrôle permet :

- de contrôler la masse d'air et la masse de gaz brûlés dans le cylindre d'un moteur à distribution variable.

- de prendre en compte la mesure des variables agissant directement sur le remplissage (pression d'admission et position des actionneurs de distribution variable) de façon à améliorer la réponse en transitoire de masse d'air et de masse de gaz brûlés.

- une amélioration de la réponse en transitoire de masse d'air. S'ensuit une amélioration de la régulation de richesse et de l'agrément de conduite. Par exemple, la lenteur des actionneurs de distribution variable (fortement dépendants de la température et de la pression d'huile) est compensée par la modification de la consigne de pression d'admission pour satisfaire la masse d'air demandée.

- un contrôle de la masse de gaz brûlés dans le cylindre. Par exemple, il est possible de dégrader la consigne de gaz brûlés à froid pour améliorer la stabilité de combustion. Le contrôle présenté positionne alors les actionneurs de distribution variable de telle façon à satisfaire la quantité de gaz brûlés désirés.

- de piloter la masse d'air enfermée dans le cylindre en restant à une quantité fixe de gaz brûlés dans le cylindre.

- de piloter la masse de gaz brûlés enfermée dans le cylindre en restant à une quantité fixe d'air dans le cylindre.

- d'utiliser une position a priori d'un des actionneurs de distribution variable (cartographie $h(N_e, \overline{M}_{air})$) pour supprimer un degré de liberté du système et agir entant que superviseur. Dans la stratégie présentée, il est possible d'utiliser indifféremment l'actionneur de distribution variable de la soupape d'admission ou de la soupape d'échappement.

### ANNEXE

### Modèle de remplissage

On considère un modèle statique de remplissage estimant la masse d'air et la masse de gaz brûlés dans le cylindre en fonction du régime, température et pression d'admission et les positions d'actionneurs (par exemple, T.Leroy, J.Chauvin, F.Le Berr, A.Duparchy and G.Alix, "Modeling Fresh Air Charge and Residual Gas Fraction on a Dual Independent Variable Valve Timing SI Engine", in Proc. of SAE Conference, 2008-01-0983, 2008).

Soient les masses d'air, $M_{air}$, et de gaz brûlées, $M_{gb}$, définies telles que

$$\begin{cases} M_{air} = \alpha_1 \dfrac{P_{adm}}{RT_{adm}} V_{ivc} - m_{gb} \\ \\ M_{gb} = \alpha_2 \dfrac{OF}{N_e} + \alpha_3 V_{evc} \end{cases}$$

avec

- $\alpha_1$, $\alpha_2$ et $\alpha_3$ : cartographies connues de $P_{adm}$ et $N_e$ (déterminées au banc moteur).

- $V_{ivc}$: volume du cylindre à l'ivc (fermeture soupape admission), fonction de la position de l'actionneur de la soupape d'admission, $\phi_{adm}$.

- $V_{evc}$: volume du cylindre à l'evc (fermeture soupape échappement), fonction de la position de l'actionneur de la soupape d'échappement, $\phi_{ech}$.

- $OF$ : facteur de croisement, fonction des positions des actionneurs des soupapes d'admission et d'échappement, $\phi_{adm}$ et $\phi_{ech}$.

Le facteur de croisement, OF , est déterminé par la relation

$$OF = \int_{\theta_{ivo}}^{\theta_{iv}=\theta_{ev}} A_{\text{int}}\, d\theta + \int_{\theta_{iv}=\theta_{ev}}^{\theta_{evc}} A_{ech}\, d\theta$$

avec

- $A_{adm}$ et $A_{ech}$: aires d'ouvertures des soupapes d'admission et d'échappement.

- $\theta$: angle vilebrequin

- $\theta_{ivo}$: angle vilebrequin à l'ivo (ouverture soupape admission), fonction de la position de l'actionneur de la soupape d'admission, $\phi_{adm}$.

- $\theta_{evc}$: angle vilebrequin à l'evc (fermeture soupape échappement), fonction de la position de l'actionneur de la soupape d'échappement, $\phi_{ech}$.

- $\theta_{iv} = \theta_{ev}$ : angle vilebrequin où les deux soupapes ont la même aire d'ouverture.

On introduit alors les fonctions $f : \Omega_P \times \Omega_{adm} \times \Omega_{ech} \to \Omega_{air}$ et $g : \Omega_P \times \Omega_{adm} \times \Omega_{ech} \to \Omega_{gb}$ définies tel que

$$\begin{cases} f(P_{adm}, \Phi_{adm}, \Phi_{ech}) = \alpha_1(P_{adm}, N_e)\dfrac{P_{adm}}{RT_{adm}} V_{ivc}(\phi_{adm}) - \alpha_2(P_{adm}, N_e)\dfrac{OF(\phi_{adm}, \phi_{ech})}{N_e} - \alpha_3(P_{adm}, N_e)V_{evc}(\phi_{ech}) \\ \\ g(P_{adm}, \Phi_{adm}, \Phi_{ech}) = \alpha_2(P_{adm}, N_e)\dfrac{OF(\phi_{adm}, \phi_{ech})}{N_e} + \alpha_3(P_{adm}, N_e)V_{evc}(\phi_{ech}) \end{cases}$$

Par soucis de clarté, on retire le régime et la température d'admission de l'expression. Il vient

$$\begin{cases} M_{air} = f(P_{adm}, \Phi_{adm}, \Phi_{ech}) \\ M_{gb} = g(P_{adm}, \Phi_{adm}, \Phi_{ech}) \end{cases}$$

**Revendications**

1. Procédé pour contrôler des masses de gaz enfermées dans un cylindre d'un moteur essence à distribution variable, ledit cylindre comportant une soupape d'admission et une soupape d'échappement munie chacune d'un actionneur de distribution variable, et ledit cylindre étant relié à un collecteur d'admission muni d'un papillon d'admission, dans lequel on détermine une consigne de masse d'air enfermée dans le cylindre et une consigne de masse de gaz brûlés enfermée dans le cylindre, **caractérisé en ce que** l'on respecte lesdites consignes de masses de gaz en réalisant les étapes suivantes :

   - on génère une consigne de pression d'admission, à partir de mesures des positions des actionneurs de distribution variable et de la consigne de masse d'air ;
   - on génère une consigne de position pour chacun des deux actionneurs de distribution variable, à partir d'une mesure de pression d'admission et de la consigne de masse de gaz brûlés; et
   - on pilote ledit papillon d'admission et lesdits actionneurs de distribution variable de façon à respecter la consigne de pression d'admission et les consignes de position des actionneurs de distribution variable.

2. Procédé selon la revendication 1, dans lequel on génère les consignes de position des actionneurs de distribution variable :

   - en générant une consigne de position d'un premier actionneur au moyen d'une cartographie ;
   - en générant une consigne de position d'un second actionneur au moyen de la consigne de position du premier actionneur et d'une mesure de pression d'admission et de la consigne de masse de gaz brûlés; et
   - en modifiant la consigne de position du premier actionneur si la consigne de position du second actionneur correspond à une position limite pour ledit second actionneur.

3. Procédé selon l'une des revendications précédentes, dans lequel on détermine la consigne de pression d'admission et les consignes de position des actionneurs de distribution variable au moyen d'un modèle statique de remplissage du cylindre, comportant un premier modèle *f* permettant d'estimer une masse d'air dans un cylindre en fonction d'une pression d'admission et de positions d'actionneurs de distribution variable, et un second modèle *g* permettant d'estimer une masse de gaz brûlés dans un cylindre en fonction d'une pression d'admission et de positions d'actionneurs de distribution variable, ledit modèle *f* étant inversible par rapport à la pression d'admission, et ledit modèle *g* étant inversible par rapport aux positions des actionneurs de distribution variable.

**Fig. 1**

**Fig. 2**

**Fig. 3**

Europäisches
Patentamt

European
Patent Office

Office européen
des brevets

## RAPPORT DE RECHERCHE EUROPEENNE

Numéro de la demande

EP 09 29 0993

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | WO 2004/016925 A (SIEMENS AG [DE]; HENN MICHAEL [DE]; ZHANG HONG [DE]) 26 février 2004 (2004-02-26) * le document en entier * ----- | 1-3 | INV. F02D33/02 F02D21/08 F02D13/02 |
| A | US 2005/205055 A1 (SHIMIZU HIROKAZU [JP]) 22 septembre 2005 (2005-09-22) * le document en entier * ----- | 1 | |
| A | US 2005/034706 A1 (NOGI TOSHIHARU [JP] ET AL NOGI TOSHIHARU [JP] ET AL) 17 février 2005 (2005-02-17) * le document en entier * ----- | 1-3 | |
| A | EP 1 104 844 A (NISSAN MOTOR [JP]) 6 juin 2001 (2001-06-06) * le document en entier * ----- | 1-3 | |

DOMAINES TECHNIQUES RECHERCHES (IPC)

F02D

Le présent rapport a été établi pour toutes les revendications

| Lieu de la recherche | Date d'achèvement de la recherche | Examinateur |
|---|---|---|
| Munich | 18 février 2010 | Aign, Torsten |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 29 0993

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

18-02-2010

| Document brevet cité<br>au rapport de recherche | | Date de<br>publication | Membre(s) de la<br>famille de brevet(s) | | Date de<br>publication |
|---|---|---|---|---|---|
| WO 2004016925 | A | 26-02-2004 | DE<br>EP<br>KR<br>US | 10234719 B3<br>1525381 A1<br>20050035249 A<br>2006042591 A1 | 15-04-2004<br>27-04-2005<br>15-04-2005<br>02-03-2006 |
| US 2005205055 | A1 | 22-09-2005 | DE<br>JP<br>JP | 102005012134 A1<br>4219836 B2<br>2005264763 A | 13-10-2005<br>04-02-2009<br>29-09-2005 |
| US 2005034706 | A1 | 17-02-2005 | AUCUN | | |
| EP 1104844 | A | 06-06-2001 | DE<br>US | 60031074 T2<br>2001011541 A1 | 15-02-2007<br>09-08-2001 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **A. Stefanopoulou ; I. Kolmanovsky.** Dynamic scheduling of internal exhaust gas recirculation systems. *Proc. IMECE,* 1997, vol. 61, 671-678
- **M. Jankovic ; F. Frischmuth ; A. Stefanopoulou ; J. Cook.** Torque management of engines with variable cam timing. *Control Systems Magazine, IEEE,* 1998, vol. 18, 34-42
- **M. Jankovic.** Nonlinear control in automotive engine applications. *Proc. of 15th International Symposium on Mathematical Theory of Networks and Systems,* 2002

- **T.Leroy ; J. Chauvin ; F. Le Berr ; A. Duparchy ; G.Alix.** Modeling Fresh Air Charge and Residual Gas Fraction on a Dual Independant Variable Valve Timing SI Engine. *Proc. of SAE Conference,* 2008
- **T.Leroy ; J.Chauvin ; N.Petit.** Airpath Control of a SI Engine with Variable Valve Timing Actuators. *Proc. of ACC,* 2008
- **J. Chauvin ; N. Petit.** Experimental Control of Variable Cam Timing Actuators. *Proc. of IFAC Automotive Control,* 2007
- **T.Leroy ; J.Chauvin ; F.Le Berr ; A.Duparchy ; G.Alix.** Modeling Fresh Air Charge and Residual Gas Fraction on a Dual Independant Variable Valve Timing SI Engine. *Proc. of SAE Conference,* 2008